# EUROPEAN PATENT APPLICATION

(11) **EP 0 995 350 A2**
(43) Date of publication of application: **26.04.2000**
(21) Application number: 99500194.8
(22) Date of filing: 22.10.1999
(51) Int. Cl.: A01C 3/00

(54) **Liquid manure treatment facility**

(30) Priority: 23.10.1998 ES 9802233
(71) Applicant: Depuracion Biologica Y Bacteriologica De Aguas Residuales, S.L., 08552 Taradell (ES)
(72) Inventor: Mons Sanz, Joaquin, 08552 Taradell (ES)
(74) Representative: Pons Arino, Angel

(57) **Abstract**

Improvements made in the invention registered under Patent No. 9702540 as a Facility for Liquid Manure Treatment which include: a liquid manure homogenization tank (2) for liquid manures which are treated with a bacteria activator the composition of which includes a minor element. The treated liquid nianures are piped to a tank where air is injected. Inside this tank, the oxygen is employed and used up in growing bacteria which micronize the organic matter to the point where it is liquefied to then be piped to a clarifier where the bacteria use nitrogen as an energy source due to the lack of oxygen, and the treated product flows through a clarifier (13) from which the water is discharged and whatever organic matter is left remaining is piped to the homogenization tank (2).

## Description

### PATENTED INVENTION

This invention involves a number of improvements made in the invention registered under Patent No. 9702540 as a Liquid Manure Treatment Facility.

### BACKGROUND OF THE INVENTION

As the State of the Art, it is currently known that liquid manures are a tremendous problems with regard to groundwater pollution, given that they progressively build up inside pits which are dug into the ground, giving rise to large-scale leaching into the groundwater, which they pollute to a major degree.

### DESCRIPTION OF THE INVENTION

The facility for which application is being filed for the granting of a patent is aimed at mixing the liquid and solid phases of liquid manures to eliminate first the organic matter and then the nitrogen, which is the polluting element.

The facility per se is quite simple with regard to its makeup and is quite easy to use to treat liquid manures.

This facility is comprised of a tank inside which the liquid manures are stored, inside which there us an activator to which a minor element is added.

This minor element is preferably manganese.

The activator, as a chemical compound, is preferably comprised of sugars, sulfates, phosphates and ureas.

In other words, the activator gives rise to a homogenization treatment by converting the ammonia content of the liquid manures into nitrates, boosting the growth of bacteria in said liquid manures.

The liquid manures treated in the aforesaid tank are then pumped to another tank called an aeration tank, where they are converted into organic matter up to the point of liquefying it or miertonizing it.

The treated liquid manures are then routed to a tank known as a denitrification tank, from which the water clarified is used at the outlet for an irrigation system and whatever particles of organic matter which might be left are pumped back to the homogenization tank.

The geometrics of the aforementioned tanks may vary in order to adapt them to the land available in each case, taking on any of the shapes customary of this type of facility (clarifiers, lagoons, drums or square tanks).

On the other hand, the agitation inside the homogenization tank can be accomplished by means of different mechanical or hydraulic systems without this having any bearing on the efficiency of the system.

Generally speaking, whether this system is installed upstream or downstream from any conventional treatment additament (calirfiers, centrifuges, filters) for the purposes of improving the separation of the solid/liquid phases has no bearing on the process and can be done without lessening the integrity of the facility.

The flow of material back and forth between the aforementioned tanks can may vary depending upon the properties of the liquid manure to be treated and the design features of the pipes employed in building the same, but the ultimate objective of these backflows is always that of obtaining the minimum possible amount of sludge involving the minimum toxic pollutants.

Within the scope of this invention, the possibility can be considered of using populations of bacteria other than those present in the liquid manures in this system.

The activator, as a chemical compound which must necessarily be added for the system to function properly, may vary in composition according to the properties of the liquid manure to be treated and can therefore include any nutrient or minor element in its makeup which is necessary for a proper activation of the bacterial biomass.

### BRIEF DESCRIPTION OF THE DRAWINGS

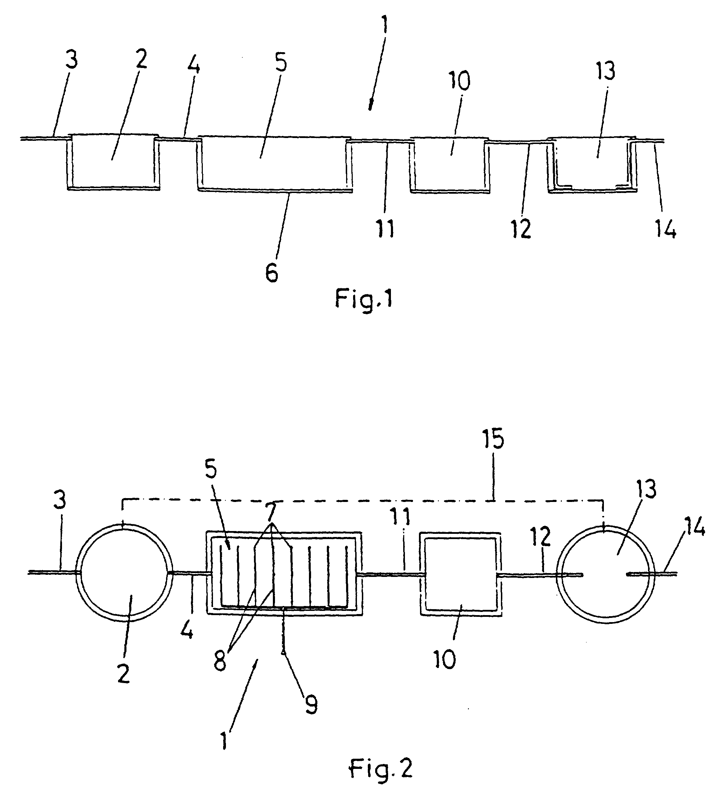

Fig. 1 provides a schematic side view of the facility of the invention.

Fig. 2 provides a plan view of Fig. 1

### DESCRIPTION OF ONE EMBODIMENT OF THE INVENTION

The facility (1) is comprised of a tank (2) through the side of the top of which the liquid manures are pumped into said tank through a pipe (3).

A homogenization of liquid manures and a combining of the solid and liquid phases take place inside this tank.

Following this treatment, the resulting product passes through a pipe (4) to a tank (5) which is an aeration tank, the bottom wall (6) of which is fitted with air jets (7) mounted on some air passage tubes or pipes (8) for the air flowing from the impelling of a vacuum pump (9).

Inside this tank, oxygen is employed and used up in growing bacteria to break down the organic matter to the point of liquefying it.

The resulting product is piped from the aeration tank into tank 10 through a pipe (11).

Inside tank 10, the bacteria use up the nitrogen due to the lack of oxygen, and the product thus treated is piped through pipe 12 to the clarifier (13), from which water for irrigation purposes is discharged through pipe 14, while whatever particles of organic material might remain are pumped by means of 15 to tank 2.

## Claims

1. Improvements made in the invention registered under Patent No. 9702540: Liquid manure treatment facility, said improvements being distinct due to the fact that they include:
- A liquid manure homogenization tank into which the liquid manures are piped and are treated by means of a bacteria activator, the composition of which included a nutrient and a minor element, manganese, which are necessary for the proper activation of the bacterial biomass.
- A second tank which is an aeration tank, into which the treated product is piped, the bottom of this tank being equipped with air jets through which air from a vacuum pump flows. Inside this tank, the oxygen is employed and used up in a culture of matter which micronizes the organic matter to the point of its being liquefied.
- A third tank, which is a denitrification tank, where the nitrogen is destroyed, given that the bacteria feed on nitrogen due to the lack of oxygen.
- A clarifier tank through which the treated product flows in liquid form and from the tank of which the water is discharged outside of the facility by means of a pipe, while the organic matter which is left remaining inside the clarifier is pumped to the homogenization tank.

2. Improvements as per Claim 1 hereinabove, which are distinct because the populations of bacteria used in the facility are preferably and the same as those present in the liquid manures.

3. Improvements as per Claim 1, which are distinct because the activator is added either manually or mechanically.
